# EUROPÄISCHE PATENTANMELDUNG

(11) **EP 1 132 672 A2**
(43) Veröffentlichungstag der Anmeldung: **12.09.2001**
(21) Anmeldenummer: 01105717.1
(22) Anmeldetag: 07.03.2001
(51) Int. Cl.: F16K 27/10

(54) **Gehäusemittelteil für Ventile**

(30) Priorität: 07.03.2000 DE 10010499
(71) Anmelder: Josch Strahlschweisstechnik GbmH, 06193 Teicha (DE)
(72) Erfinder: Schenke, Joachim, 39118 Magdeburg (DE); Sobisch, Götz, 06193 Teichau (DE); Philipp, Steffen, 06188 Hohenthurm (DE)
(74) Vertreter: Leinung, Günter

(57) **Zusammenfassung**

Die Erfindung betrifft ein Gehäusemittelteil für Ventile, die durch Verschweißung von Schweißbaugruppen hergestellt werden.

Das Gehäusemittelteil besteht aus Rohr 1, den Stutzen 2 und 3, sowie den Sitz 4. Die einzelnen Bauteile werden vor dem Schweißen mechanisch bearbeitet und komplett in der finalen Position montiert und über ein geeignetes Verfahren, bevorzugt mit einem Laser, geheftet. Anschließend werden die einzelnen Bauteile in einer Elektronenstrahlschweißanlage mittels dem Elektronenstrahl verschweißt.

## Beschreibung

Die Erfindung betrifft ein Gehäusemittelteil für Ventile entsprechend dem Oberbegriff des Anspruchs 1.

Es ist bekannt, daß Mittelteile von Ventilgehäusen durch die Verschweißung von Schweißbaugruppen hergestellt werden.

So sind Konstruktionen bekannt, siehe Sulzer Rundschau 2/1973, S. 141, und DE 197 13 370, bei denen Halbkugelschalen, gepreßt oder geschmiedet, in Kombination mit einem geschmiedeten oder gegossenen Ventilsitz zu einem Ventilgehäusemittelteil verschweißt werden. Nachteilig sind hier der hohe Zeit- und Kostenaufwand für die Bereitstellung der Schmiede-, Preß- oder Gußteile.

Aufgabe der Erfindung ist es, ein universell einsetzbares elektronenstrahlgeschweißtes Gehäusemittelteil für Ventile zu schaffen, daß ausschließlich aus mechanisch bearbeiteten Standardbauteilen Rohr und Rundmaterial besteht, wobei eine 100%ige Durchschweißung der drucktragenden Nähte zur Vermeidung von Spaltkorrosion zu sichern ist.

Diese Aufgabe wird mit einer Gehäusekonstruktion mit den Merkmalen des Anspruchs 1 gelöst.

Rohr und Rundmaterial in den für den Armaturenbau typischen Werkstoffen werden durch den Händler vorgehalten und sind somit kurzfristig verfügbar. Die zeit- und kostenaufwendige Beschaffung von geschmiedeten, gegossenen oder gepreßten Bauteilen entfällt.

Durch die Verwendung von korrosionsbeständigem Material für den Gehäusesitz ist das kostenintensive Auftragsschweißen des Gehäusesitzes nicht notwendig.

Die Konstruktion ist sowohl für alle gängigen Gehäusewandstärkenbereiche des Armaturenbaus, d. h. von Niederdruck bis Hochdruck geeignet.

Die Konstruktion des Gehäusemittelteiles ist geeignet als Basiselement für vielfältige Komplettierungsvarianten wie Einschweißenden, Flansche verschiedener Druckstufen und Normen (DIN, ANSI, etc.), Anpassung an Baulängen, Komplettierung mit verschiedenen Deckelausführungen sowie Armaturenfunktionen wie Absperrventil, Stellventil, Druckregler.

Ausführungsbeispiele der Erfindung sind in den Zeichnungen dargestellt und werden im folgenden näher beschrieben.

Es zeigen:
- Figur 1:: Perspektivische Ansicht eines Gehäusemittelteiles
- Figur 2:: einen Schnitt durch das Gehäusemittelteil.

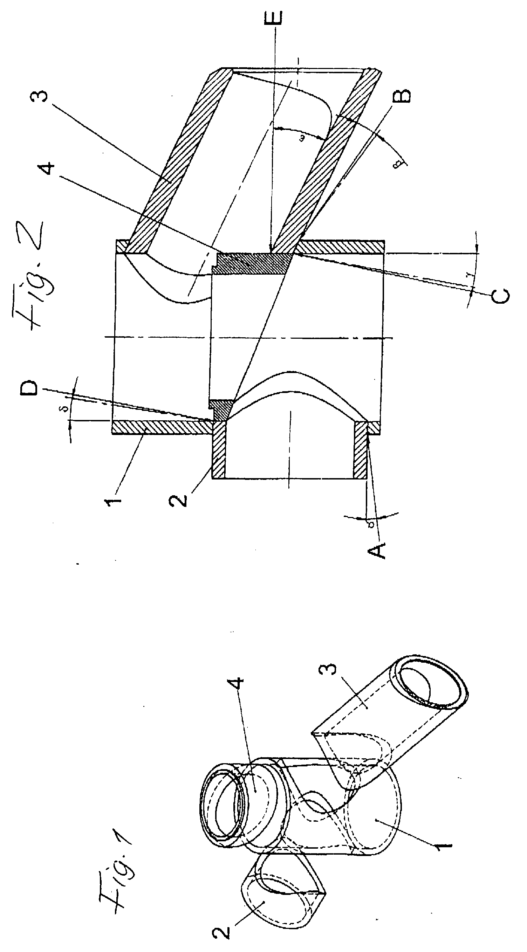

Das Ventilgehäusemittelteil besteht aus den Rohren 1, den Stutzen 2, 3 und dem Sitz 4. Die Bauteile werden vor dem Schweißen mechanisch bearbeitet und komplett in der finalen Position montiert und über ein geeignetes Verfahren, bevorzugt mit dem Laser, geheftet. Die Bauteile werden dann in der Elektronenstrahlschweißanlage positioniert und wie folgt mit dem Elektronenstrahl verschweißt:
1. Komplette Durchschweißung der Verbindungen Stutzen 2 mit Rohr 1 und Stutzen 2 mit Rohr 1, indem der Elektronenstrahl A und B unter einer definierten Winkelstellung entlang des Umfanges der Stutzen geführt wird. Die bei einem Schweißumlauf wechselnden Schweißtiefen, die durch die Wandstärke und Umfang vom Rohr 1 sowie der Schrägstellung der Stutzen 2 und 3 zur Rohrleitunsgachse Rohr 1 definiert sind, werden durch die Variation der Schweißparameter pro Schweißumlauf gesteuert, so daß die komplette Durchschweißung der Rohrwandstärke des Rohres 1 gesichert wird.
2. Der Venilsitz wird mit dem Elektronenstrahl, siehe Darstellung C und D, im gesamten Berührungsbereich Rohr 1 mit Sitz 4 mit einer definierten Nahttiefe verschweißt.
3. Eine Elektronenstrahl-Innenschweißung durch den Stutzen 3 entlang der Berührungskontur Stutzen 3 mit Sitz 4 sichert das spaltkorrosionsfreie Einschweißen des Sitzes 4.

## Patentansprüche

1. Ventilgehäusemittelteil, **dadurch gekennzeichnet, daß**
in dem Rohr (1) der Sitz (4) und die Stutzen (2; 3) eingefügt werden bei einer Toleranz <=0,1 mm zwischen den Berührungsflächen, daß die Stutzen (2; 3) in dem Rohr (1) mit im Umfang wechselnden Schweißtiefen, die wiederum eine direkte Funktion von Außendurchmesser Rohr (1), Wandstärke des Rohres (1) sowie der Winkel Ω und Ψ <=90° und der Neigung der Stutzen (2) bzw. (3) zur Rohrachse (1) darstellen, spaltfrei durch den Elektronenstrahl A bzw. B, die wiederum mit den Winkeln α und β<=10° zur Achse der Stutzen geführt werden, verschweißt werden.

2. Ventilgehäusemittelteil nach Anspruch 1, **dadurch gekennzeichnet, daß**
die Berührungsflächen Rohr (1) mit Sitz (4) mit dem Elektronenstrahl C bzw. D unter den Winkel δ und γ<=10° und einer Wandstärke <= der Wandstärke der Stutzen (2) bzw. (3) axial verschweißt werden.

3. Ventilgehäusemittelteil nach einem der Ansprüche 1 und 2, **dadurch gekennzeichnet, daß**
die Berührungsflächen Rohr (1), Stutzen (2) bzw. Stutzen (3) mit dem Gehäusesitz (4), spaltfrei <=2 mm tief, mit dem Elektronenstrahl bei Stellung des Elektronenstrahles E im Winkel ε zur Rohrleitungsachse verschweißt werden.

4. Ventilgehäusemittelteil nach einem der Ansprüche 1 bis 3, **dadurch gekennzeichnet, daß**
der Gehäusesitz (4) sowohl aus dem Werkstoff des Rohres (1), als auch aus anderen Materialien, insbesondere korrosionsbeständigen Materialien, gefertigt sind.
